Europäisches Patentamt

(19)　European Patent Office

Office européen des brevets

(11)　**EP 1 009 779 B1**

(12)　**EUROPÄISCHE PATENTSCHRIFT**

(45) Veröffentlichungstag und Bekanntmachung des Hinweises auf die Patenterteilung:
　　**30.01.2002　Patentblatt 2002/05**

(51) Int Cl.⁷: **C09C 1/02**, C08K 9/00, D21H 17/67, D21H 19/38, C09D 7/12, C09D 11/00, C09K 3/00, C09C 3/08

(21) Anmeldenummer: **98946408.6**

(22) Anmeldetag: **21.08.1998**

(86) Internationale Anmeldenummer:
　　**PCT/EP98/05337**

(87) Internationale Veröffentlichungsnummer:
　　**WO 99/11721 (11.03.1999 Gazette 1999/10)**

(54) **BIMOLEKULAR BESCHICHTETES CALCIUMCARBONAT SOWIE VERFAHREN ZUR HERSTELLUNG DAVON**

BIMOLECULAR COATED CALCIUM CARBONATE AND PROCESS OF PRODUCTION THEREOF

CARBONATE DE CALCIUM RECOUVERT DE FACON BIMOLECULAIRE ET PROCEDE DE PRODUCTION DE CARBONATE DE CALCIUM RECOUVERT

(84) Benannte Vertragsstaaten:
　　**AT BE DE DK ES FI FR GB IT NL**

(30) Priorität: **03.09.1997　DE 19738481**

(43) Veröffentlichungstag der Anmeldung:
　　**21.06.2000　Patentblatt 2000/25**

(73) Patentinhaber: **Solvay Soda Deutschland GmbH**
　　**30173 Hannover (DE)**

(72) Erfinder:
　• **NOVER, Christoph**
　　**D-47495 Rheinberg (DE)**

　• **DILLENBURG, Helmut**
　　**D-47495 Rheinberg (DE)**

(74) Vertreter: **Lauer, Dieter, Dr.**
　　**Solvay Pharmaceuticals GmbH,**
　　**Hans-Böckler-Allee 20**
　　**30173 Hannover (DE)**

(56) Entgegenhaltungen:
　　**EP-A- 0 377 149**　　　　**DE-A- 3 801 649**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein bimolekular beschichtetes Calciumcarbonat sowie ein Verfahren zur gesteuerten Oberflächenbehandlung von Calciumcarbonat.

Die Verwendung von feingemahlenem Kalkstein oder gefälltem Calciumcarbonat als Füllstoff für z.B. Kautschuk, Kunststoffe, Papier oder Anstrichmittel ist bekannt. Ebenso ist bekannt, daß die Dispergierbarkeit der Calciumcarbonat-Teilchen, bzw. die Affinität der Teilchen gegenüber der Substanz oder der Mischung, der das Calciumcarbonat als Füllstoff zugesetzt werden soll, durch eine Oberflächenbehandlung mit z.B. Fettsäuren bzw. deren Salzen verbessert oder erhöht werden kann.

Die DE PS 958 830 beschreibt ein Verfahren zur Verbesserung der Eigenschaften von Calciumcarbonat, in dem das Calciumcarbonat in Gegenwart von oberflächenaktiven Stoffen gemahlen wird. Um eine vollständige Bedeckung der Calciumcarbonat-teilchen zu erhalten, kann die Menge der zugesetzten oberflächenaktive Stoffe beträchtlich schwanken. Gemäß DE PS 958 830 liegen die Grenzen bei 0,1 bis 40 Gew.-% bezogen auf die Calciumcarbonatmenge.

Aus DE 38 01 649 bzw. DE 39 00 054 ist bekannt, daß Unterbodenschutzmassen mit verbesserter Fließfähigkeit herstellbar sind, wenn die Füllstoffe, insbesondere Calciumcarbonat vollständig oder partiell mit oberflächenaktiven Stoffen gecoatet sind. Angaben über den Grad der partiellen Oberflächenbelegung können diesen Schriften nicht entnommen werden.

Gecoatetes Calciumcarbonat wird für die unterschiedlichsten Anwendungen als funktioneller Füllstoff benötigt und eingesetzt. Die unterschiedlichen Anwendungen stellen auch unterschiedliche Anforderungen an das gecoatete Calciumcarbonat. Diese Anforderungen werden z.B. durch die Fließgrenze im Weichmachergemisch (Bingham-Methode) beschrieben, wobei sich für die einzelnen Anwendungen bestimmte Fließgrenzen als besonders geeignet erwiesen haben.

Aufgrund der bisher bekannten Verfahren zur Oberflächenbehandlung der Calciumcarbonat-Teilchen konnte man davon ausgehen, daß ein Zusammenhang zwischen Coatinggrad und Fließgrenze besteht. Eine Methode zur Steuerung der anwendungstechnischen Eigenschaften unter Ausnutzung dieses Zusammenhanges ist jedoch bisher nicht bekannt geworden.

Die Aufgabe der Erfindung besteht darin, ein Verfahren zur Herstellung von gecoatetem Calciumcarbonat mit definiertem Coatinggrad und definierten Eigenschaften bereitzustellen.

Erfindungsgemäß wird die Aufgabe dadurch gelöst, daß in Abhängigkeit vom mittleren Teilchendurchmesser (dp) des Calciumcarbonates die notwendige Menge des Coatingmittels bestimmt wird. Somit können durch gezielte Variation von Teilchendurchmesser und/oder Coatinggrad die anwendungstechnischen Eigenschaften des Füllstoffes gesteuert werden.

Insbesondere können solche Eigenschaften wie Fließgrenze, Viskosität, Thixotropie, Dispergierbarkeit oder Haftungsvermögen von Mischungen durch gecoatetes Calciumcarbonat als funktioneller Füllstoff gesteuert und beeinflußt werden.

Das Calciumcarbonat, das erfindungsgemäß behandelt wird kann entweder trocken oder naß gemahlenes natürliches Calciumcarbonat oder Kreide oder synthetisches Calciumcarbonat, wie gefälltes Calciumcarbonat sein.

Üblicherweise wird Calciumcarbonat, das einen durchschnittlichen Teilchendurchmesser von maximal $50\,\mu m$, vorzugsweise weniger als $20\,\mu m$, insbesondere weniger als $5\mu m$, aufweist, als Füllstoff verwendet. Teilchen mit einer mittleren Teilchengröße von 0,005 bis 5 $\mu m$, insbesondere 0,01 bis 1 $\mu m$, werden bevorzugt eingesetzt.

Coatingmittel im Sinne der Erfindung sind Stoffe, die durch Oberflächenwirkung auf den Calciumcarbonat-Teilchen festgehalten werden können.

In einer Ausführungsform der Erfindung werden gesättigte und/oder ungesättigte Carbonsäuren, z.B. Fettsäuren, substituierte Fettsäuren, deren Salze oder Fettalkohole - um nur einige der geeigneten Stoffe zu nennen - als Coatingmittel eingesetzt. In einer bevorzugten Ausführungsform werden $C_2$-$C_{32}$- Fettsäuren, vorzugsweise $C_{14}$-$C_{22}$-Fettsäuren, z.B. Stearinsäure, oder die Alkali- oder Ammoniumsalze der entsprechenden Fettsäuren als Coatingmittel verwendet.

Das Calciumcarbonat wird in an sich bekannter Weise mit dem Coatingmittel in Kontakt gebracht. Das Coatingmittel wird in flüssiger oder fester Form, vorzugsweise als Emulsion, mit dem dispergierten Calciumcarbonat z.B. während des Mahlvorganges oder während und/oder nach der Fällung dispergiert oder emulgiert, wobei das Coatingmittel auf der Oberfläche des Calciumcarbonats festgehalten wird.

In einer Ausführungsform erfolgt die Behandlung des Calciumcarbonats mit den oberflächenaktiven Stoffen in emulgierter Form im wässrigen System. Dabei wurde überraschend gefunden, daß das Calciumcarbonat ein bimolekulares Coating, also eine Doppelschicht, aufweist. In bekannter Art und Weise wurde errechnet, wie groß z.B. der Platzbedarf der Stearinsäure als Coatingmittel ist. Mit anderen Worten, wieviel Calciumcarbonatteilchenoberfläche vorhanden sein muß. Durch ESCA-Messung wurde der Bedeckungsgrad bestimmt und mit dem Platzbedarf in Beziehung gesetzt und somit festgestellt, daß eine Doppelschicht vorliegen muß. Es konnte weiterhin festgestellt werden, daß 20 bis 60 % der Kristalloberfläche der Calciumcarbonat-Teilchen in Form einer Doppelschicht gecoatet sind.

Der Bildungsmechanismus der Doppelschicht kann folgendermaßen erklärt werden:

In einer Mischung aus Wasser, Natronlauge und Stearinsäure bilden sich die kugelförmigen Mizellen des Natriumstearates. Diese Emulsion wird mit dem Calciumcarbonat (CCP) in Kontakt bebracht, z.B. durch Mischen einer Calciumcarbonatsuspension mit der Emulsion.

Die Mizellen nähern sich der Calciumcarbonatoberfläche und berühren diese an einem Punkt, hierbei findet eine Salzaustauschreaktion statt.

Durch Deformation der Mizellen berühren immer mehr Na-Stearationen die Calciumcarbonatoberfläche. Da sich die Mizellen nicht öffnen, sondern nur deformieren, bildet sich die beschriebene Doppelschicht aus.

Der Platzbedarf einer Stearin-Kopfgruppe beträgt etwa 20 Å. Wird zum Beispiel Calciumcarbonat mit 21 m$^2$ BET-Oberfläche mit 4,8 % Stearat beschichtet, was in etwa einen Bedeckungsanteil von 100 % bei einer Einfachbedeckung entspricht, so zeigen die ESCA-Messungen, daß 49 % der Carbonatoberfläche, bezogen auf die Gesamtoberfläche, bedeckt sind und zwar in Form einer Doppelschicht.

Als ein typisches Charakteristikum für die anwendungstechnische Eignung von Calciumcarbonaten als Füllstoff wird üblicherweise die Fließgrenze nach Bingham im Weichmachergemisch angegeben.

Es wurde gefunden, daß das Verhältnis von gecoateter zu ungecoateter Oberfläche die Fließgrenze beeinflußt.

In Abhängigkeit von der Art und der Menge des Coatingmittels ändert sich auch der Coatinggrad des Calciumcarbonates. In an sich bekannter Weise wird daher die Fließgrenze im Weichmachergemisch bestimmt und danach mit dem Coatinggrad in Zusammenhang gebracht.

Durch Anwendung des erfindungsgemäßen Verfahrens ist es möglich den Coatinggrad so exakt zu steuern, daß gecoatetes Calciumcarbonat in den geforderten Qualitäten mit hoher Reproduzierbarkeit und in effizienter Weise bereitgestellt werden kann.

Um die zur Einstellung der gewünschten Eigenschaften erforderliche Menge des einzusetzenden Coatingmittels bestimmen zu können, wird zunächst der mittlere Teilchendurchmesser der Calciumcarbonatkristalle bestimmt. Es sind verschiedene Methoden zur Bestimmung der Teilchengröße bekannt.

In Anlehnung an die Methode Blaine wird durch Messen der Luftdurchlässigkeit einer gepreßten CaCO$_3$-Tablette der mittlere Teilchendurchmesser (dp) bestimmt.

Die zur Ermittlung der notwendigen Menge an Coatingmittel benötigte Teilchenoberfläche ergibt sich durch folgende Beziehung:

$$\text{Spezifische mittlere kugeläquivalente Teilchenoberfläche} = \frac{4\ \pi\ (dp/2)^2}{4/3\ \pi\ (dp/2)^3 \cdot d}$$

Die Dichte (d) beträgt für calcitisches Calciumcarbonat 2,71·10$^6$ g/m$^3$ und für aragonitisches Calciumcarbonat 2,93·10$^6$ g/m$^3$.

Die mittlere spezifische kugeläquivalente Teilchenoberfläche beträgt somit für calcitisches CaCO$_3$ 2,21/dp (m$^2$/g) und für aragonitisches CaCO$_3$ 2,05/dp (m$^2$/g). Die für den jeweils gewünschten Coatinggrad benötigte Coatingmittelmenge ergibt sich aus folgender Gleichung 1

$$\text{Coatingmittel (g)} = \text{Bedeckungsgrad (g/m}^2) \cdot (5{,}99/d \cdot dp)\ (\text{m}^2/\text{g}) \cdot \text{CaCO}_3(\text{g})$$

Aufgrund dieser Beziehung ist es möglich die Menge des Coatingmittels genau zu dosieren und Calciumcarbonat entsprechend den gewünschten Anwendungsgebieten mit gleichbleibenden Eigenschaften herzustellen.

Das erfindungsgemäß gecoatete Calciumcarbonat besitzt eine hohe Funktionalität als Mischungsbestandteil für z.B. Polymere, Polymerzubereitungen, Kunststoffe, Überzugsmassen, Dichtungsmassen, Papier, Farben, insbesondere Druckfarben.

Die nachfolgenden Beispiele sollen die Erfindung erläutern ohne sie einzuschränken.

**Beispiel 1:**

Herstellung gefälltes Calciumcarbonat (CCP)

In einem Behälter wird Kalkmilch mit einer Konzentration von 150 g/l Calciumhydroxid auf 18°C temperiert. Nach Erreichen dieser Starttemperatur wird CO$_2$ in den Behälter eingeleitet, wobei die CO$_2$-Zufuhr konstant gehalten wird.

Bedingungen:

| CO$_2$-Luftgemisch | 30 : 70 |
|---|---|
| CO$_2$-Zufuhr | 1 cbm/pro Stunde bezogen auf 10 l Kalkmilch |
| Fällzeit | 100 min. |

**Beispiel 2:**

Vorbereitung des Coatingmittels

1035 g Wasser werden auf 75 °C erhitzt, 157,5 g Stearinsäure hinzugefügt und die Mischung 15 Minuten gerührt. Unter Rühren werden 60 ml 25%-ige Ammoniaklösung hinzugefügt und die Mischung 30 Minuten homogenisiert. Man erhält eine helle homogene Emulsion mit einem Anteil von 12,6 Gew-% Stearinsäure.

**Beispiel 3:**

Calciumcarbonat-Coating

In Anlehnung an die Methode Blaine wird der mittlere Teilchendurchmesser ermittelt. Calcitisches Calciumcarbonat dp = 0,067 µm

Die gewünschte Fließgrenze im Weichmachergemisch beträgt 260 Pa.

Der für diese Fließgrenze erforderliche Coatinggrad wird an Hand einer Eichkurve mit 0,00058 g/m$^2$ bestimmt.

Die notwendige Coatingmittelmenge wird mit Gleichung 1 errechnet und beträgt 1,9 g/100g CaCO$_3$.

In 20 l der gemäß Beispiel 1 hergestellten Suspension werden 602 g des gemäß Beispiel 2 hergestellten Coatingmittels eingetragen und 1 Stunde bei 75 °C gerührt. Das gecoatete Calciumcarbonat wird abgetrennt, getrocknet, gemahlen.

Die folgende Tabelle zeigt die Ergebnisse der Beispiele 4 bis 8, wobei das Calciumcarbonat analog Beispiel 1 bis 3 behandelt wurde.

## Tabelle

| Bsp. | dp (µm) | Coatinggrad (g Stearinsäure/m$^2$ Partikeloberfläche) | Stearinsäuremenge (g Stearinsäuremenge/100 g Calciumcarbonat) | Fließgrenze im Weichmachergemisch nach Bingham (Pa) |
|---|---|---|---|---|
| 4 | 0,059 | 0,00046 | 1,7 | 32 |
| 5 | 0,062 | 0,00056 | 2,0 | 288 |
| 6 | 0,061 | 0,00069 | 2,5 | 51 |
| 7 | 0,070 | 0,00094 | 3,0 | 82 |
| 8 | 0,098 | 0,00111 | 2,5 | 123 |

**Beispiel 9:**

Herstellung einer Unterbodenschutzmasse

| Weichmacher, Dioctylphthalat | 55 g |
|---|---|

(fortgesetzt)

| | |
|---|---|
| Weichmacher, Diisononylphthalat | 60 g |
| verpastbares PVC, Solvic 374 MIB | 70 g |
| verpastbares PVC, Solvic 266 SF | 30 g |
| $CaCO_3$, fettsäuregecoatet gemäß Bsp. 5 | 70,0 g |
| UV-Stabilisator, IRGASTAB 17MOK | 2,0 g |
| Haftvermittler, Euretek 505 | 4,0 g |
| Trockenmittel, Calciumoxid | 5,0 g |

**Ergebnis**

| | |
|---|---|
| Fließgrenze nach Bingham | 207 Pa |
| Viskosität bei Schergeschwindigkeit 100/s | 6,9 Pas |
| Haftung | sehr gut |
| Dispergierqualität/Grindometer | < 35 µm |

**Beispiel 10:**

Herstellung einer Offsetdruckfarbe

| | |
|---|---|
| Pigment, geflusht, Eurolith Blue | 25,0 Gew.-% |
| $CaCO_3$, fettsäuregecoatet gemäß Bsp. 8 | 15,0 Gew.-% |
| Drucköl, Haltermann, PKWF 4/7 | 12,0 Gew.-% |
| Bindemittel, Uroset | 48,0 Gew.-% |

**Ergebnis**

| | |
|---|---|
| Fließgrenze | 35 Pa |
| Viskosität bei Schergeschwindigkeit 3/sec | 11,3 Pas |
| Farbtiefe C | 53 |
| Glanz 60° | 68 % |

**Beispiel 11:**

Herstellung von Polyurethanmassen, 2-Komponentensystem

| | |
|---|---|
| Polyol, Desmophen 1150 | 150 g |
| $CaCO_3$. fettsäuregecoatet gemäß Bsp. 7 | 60 g |
| Titandioxidpigment (Rutil), Tiona Rcl-535 | 3 g |
| Trockenpaste, Baylith L-Paste | 15 g |
| Haftvermittler, Acronal 700L | 1 g |
| Weichmacher, Mesamoll II | 35 g |
| Polyurethan-Aktivator | 1 g |
| Isocyanat | 3 g |

**Ergebnis**

| Fließgrenze nach Bingham | 186 Pa |
|---|---|
| Viskosität bei Schergeschwindigkeit 100/s | 5,9 Pas |
| Pot life time | 27 min |
| Haftung | gut |
| Dispergierqualität/Grindometer | < 35 µm |

**Beispiel 12:**

Herstellung von Silikonmassen

Für die Prüfung wurde eine nichtaushärtende Silikonmasse hergestellt, die einem 2-Komponentensystem entspricht, wobei der zum Aushärten erforderliche Katalysator nicht zugegeben wurde.

| Silikon-Polymer | 60 g |
|---|---|
| $CaCO_3$, fettsäuregecoatet gemäß Bsp. 6 | 38 g |
| Weichmacher | 2 g |

**Ergebnis**

| Fließgrenze nach Casson | 988 Pa |
|---|---|
| Viskosität bei Schergeschwindigkeit 5/s | 305 Pas |
| Dispergierqualität/Grindometer | < 35 µm |

**Patentansprüche**

**1.** In wässrigen Systemen gecoatetes Calciumcarbonat, **dadurch gekennzeichnet, daß** 20 bis 60 % der Kristalloberfläche bimolekular in Form einer Doppelschicht gecoatet sind, mit der Maßgabe, daß eine in Abhängigkeit vom mittleren Teilchendurchmesser des Calciumcarbonates nach der Beziehung

$$\text{Coatingmittel (g)} = \text{Bedeckungsgrad (g/m}^2) \cdot (5{,}99/d \cdot dp) \ (m^2/g) \cdot CaCO_3(g)$$

bestimmte Coatingmittelmenge mit dem Calciumcarbonat in Kontakt gebracht wird.

**2.** Verfahren zur gesteuerten bimolekularen Beschichtung von Calciumcarbonat-Teilchen, **dadurch gekennzeichnet, daß** eine in'Abhängigkeit vom mittleren Teilchendurchmesser des Calciumcarbonates nach der Beziehung

$$\text{Coatingmittel (g)} = \text{Bedeckungsgrad (g/m}^2) \cdot (5{,}99/d \cdot dp) \ (m^2/g) \cdot CaCO_3(g)$$

bestimmte Coatingmittelmenge mit dem Calciumcarbonat in Kontakt gebracht wird.

**3.** Verfahren zur bimolekularen Beschichtung von Calciumcarbonat nach Anspruch 2, **dadurch gekennzeichnet, daß** das Coatingmittel als Emulsion in eine Calciumcarbonat-Suspension eingetragen und mit dem Calciumcarbonat dispergiert bzw. emulgiert wird.

**4.** Verfahren zur bimolekularen Beschichtung von Calciumcarbonat nach Anspruch 2 und 3, **dadurch gekennzeichnet, daß** Calciumcarbonat mit einem mittleren Teilchendurchmesser von max. 50 µm, vorzugsweise von weniger als 20 um verwendet wird.

**5.** Verfahren zur bimolekularen Beschichtung von Calciumcarbonat nach Anspruch 2 bis 4, **dadurch gekennzeichnet, daß** Calciumcarbonat mit einem mittleren Teilchendurchmesser von 0,005 bis 5 µm, vorzugsweise 0,01 bis 1 µm verwendet wird.

**6.** Verfahren zur bimolekularen Beschichtung von Calciumcarbonat nach Anspruch 2 bis 5, **dadurch gekennzeichnet, daß** als Coatingmittel Stoffe verwendet werden, die durch Oberflächenwirkung auf den Calciumcarbonat-Teilchen festgehalten werden.

**7.** Verfahren zur bimolekularen Beschichtung von Calciumcarbonat nach Anspruch 2 bis 6, **dadurch gekennzeichnet, daß** als Coatingmittel gesättigte und/oder ungesättigte Carbonsäuren mit einer Kettenlänge von $C_2$-$C_{32}$-, vorzugsweise $C_{14}$-$C_{22}$-Kohlenstoffatomen, z.B. Fettsäuren, substituierte Fettsäuren, deren Salze oder Fettalkohole verwendet werden.

**8.** Verwendung des Calciumcarbonats nach Anspruch 1 als funktioneller Füllstoff für Polymere, Polymerzubereitungen, Papier oder Farben.

**9.** Verwendung des bimolekular beschichteten Calciumcarbonats nach Anspruch 8 als funktioneller Füllstoff für Kunststoffe, Überzugsmassen, Dichtungsmassen oder Druckfarben.

**Claims**

**1.** Calcium carbonate coated in aqueous systems, **characterised in that** 20 to 60% of the crystal surface is bimolecular coated in the form of a double layer, with the proviso that an amount of coating agent determined dependent on the average particle diameter of the calcium carbonate in accordance with the equation

$$\text{coating agent (g)} = \text{degree of coverage (g/m}^2) \cdot 5.99/\text{d}\cdot\text{dp)(m}^2/\text{g)}\cdot\text{CaCO}_3\text{(g)}$$

is brought into contact with the calcium carbonate.

**2.** A method for the controlled bimolecular coating of calcium carbonate particles, **characterised in that** an amount of coating agent determined dependent on the average particle diameter of the calcium carbonate in accordance with the equation

$$\text{coating agent (g)} = \text{degree of coverage (g/m}^2) \cdot 5.99/\text{d}\cdot\text{dp)(m}^2/\text{g)}\cdot\text{CaCO}_3\text{(g)}$$

is brought into contact with the calcium carbonate.

**3.** A method for the bimolecular coating of calcium carbonate according to Claim 2, **characterised in that** the coating agent is introduced as emulsion into a calcium carbonate suspension and is dispersed or emulsified with the calcium carbonate.

**4.** A method for the bimolecular coating of calcium carbonate according to Claim 2 and 3, **characterised in that** calcium carbonate having an average particle diameter of at most 50 µm, preferably of less than 20 µm, is used.

**5.** A method for the bimolecular coating of calcium carbonate according to Claims 2 to 4, **characterised in that** calcium carbonate having an average particle diameter of 0.005 to 5 µm, preferably 0.01 to 1 µm, is used.

**6.** A method for the bimolecular coating of calcium carbonate according to Claims 2 to 5, **characterised in that** substances which are secured to the calcium carbonate particles by surface action are used as coating agents.

**7.** A method for the bimolecular coating of calcium carbonate according to Claims 2 to 6, **characterised in that** saturated and/or unsaturated carboxylic acids having a chain length of $C_2$-$C_{32}$, preferably $C_{14}$-$C_{22}$, carbon atoms, e.g. fatty acids, substituted fatty acids, their salts or fatty alcohols are used as coating agents.

**8.** The use of the calcium carbonate according to Claim 1 as a functional filler for polymers, polymer preparations, paper or paints.

9. The use of the bimolecular coated calcium carbonate according to Claim 8 as a functional filler for plastics, covering compounds, sealing compounds or printing inks.


**Revendications**

1. Carbonate de calcium enrobé dans un système aqueux, **caractérisé en ce que** 20 à 60 % de la surface cristalline sont enrobés de façon bimoléculaire sous la forme d'une couche double, une quantité d'agent d'enrobage, déterminée en fonction du diamètre moyen des particules du carbonate de calcium selon la relation

$$\text{Agent d'enrobage (g)} = \text{degré de recouvrement (g/m}^2) \cdot (5{,}99\ /d \cdot dp)\ (\text{m}^2/\text{g}) \cdot \text{CaCO}_3\ (\text{g}),$$

devant être mise en contact avec le carbonate de calcium.

2. Procédé d'enrobage bimoléculaire contrôlé de particules de carbonate de calcium, **caractérisé en ce qu'**une quantité d'agent d'enrobage, déterminée en fonction du diamètre moyen des particules du carbonate de calcium selon la relation

$$\text{Agent d'enrobage (g)} = \text{degré de recouvrement (g/m}^2) \cdot (5{,}99\ /d \cdot dp)\ (\text{m}^2/\text{g}) \cdot \text{CaCO}_3\ (\text{g})$$

est mise en contact avec le carbonate de calcium.

3. Procédé d'enrobage bimoléculaire de carbonate de calcium selon la revendication 2, **caractérisé en ce que** l'agent d'enrobage est incorporé sous la forme d'une émulsion dans une suspension de carbonate de calcium et dispersé ou émulsionné avec le carbonate de calcium.

4. Procédé d'enrobage bimoléculaire de carbonate de calcium selon les revendications 2 et 3, **caractérisé en ce que** l'on utilise du carbonate de calcium présentant un diamètre moyen de particules de 50 μm au plus, de préférence de moins de 20 μm.

5. Procédé d'enrobage bimoléculaire de carbonate de calcium selon les revendications 2 à 4, **caractérisé en ce que** l'on utilise du carbonate de calcium présentant un diamètre moyen de particules compris entre 0,005 et 5 μm, de préférence entre 0,01 et 1 μm.

6. Procédé d'enrobage bimoléculaire de carbonate de calcium selon les revendications 2 à 5, **caractérisé en ce que** l'on utilise en tant qu'agent d'enrobage des substances qui sont maintenues sur les particules de carbonate de calcium par action de surface.

7. Procédé d'enrobage bimoléculaire de carbonate de calcium selon les revendications 2 à 6, **caractérisé en ce que** l'on utilise en tant qu'agent d'enrobage des acides carboxyliques saturés et/ou insaturés présentant une longueur de chaîne avec atomes de carbone en $C_2$ à $C_{32}$, de préférence en $C_{14}$ à $C_{22}$, par exemple des acides gras, des acides gras substitués, leurs sels ou alcools gras.

8. Utilisation du carbonate de calcium selon la revendication 1 en tant que matière de charge fonctionnelle pour des polymères, des préparations polymères, du papier ou des peintures et assimilés.

9. Utilisation du carbonate de calcium enrobé de façon bimoléculaire selon la revendication 8 en tant que matière de charge fonctionnelle pour des plastiques, des matériaux de revêtement, des matériaux d'étanchéité ou des encres d'imprimerie.